# EUROPÄISCHE PATENTANMELDUNG

(11) **EP 0 780 263 A2**
(43) Veröffentlichungstag der Anmeldung: **25.06.1997**
(21) Anmeldenummer: 96119844.7
(22) Anmeldetag: 11.12.1996
(51) Int. Cl.: B60N 2/44

(54) **Kraftfahrzeugsitz**

(30) Priorität: 21.12.1995 DE 19547971
(71) Anmelder: BASF AKTIENGESELLSCHAFT, 67056 Ludwigshafen (DE)
(72) Erfinder: Möck, Christof, Dr., 68259 Mannheim (DE); Pimentel, Raul, 19234318 Mexico (MX)

(57) **Zusammenfassung**

Die Erfindung betrifft einen Automobilsitz, umfassend einen Rahmen aus Polyolefin-Schaumstoff sowie einen Kern aus organischen Fasern, die durch ein Bindemittel miteinander verbunden sind.

## Beschreibung

Die Erfindung betrifft einen Automobilsitz, der aus mehreren Komponenten besteht.

Automobilteile werden neuerdings in zunehmendem Maße aus Kunststoff gefertigt, zumeist aus Polyurethan-Schaumstoff. Dieser Kunststoff hat jedoch den Nachteil, daß er nicht aufschmelzbar und somit schwierig zu recyclieren ist. Außerdem besitzen Polyurethan-Schaumstoffe ein verhältnismäßig hohes Gewicht. Man hat auch schon daran gedacht, Automobilsitze aus dem leichteren und recyclierbaren Polypropylen-Partikelschaum zu fertigen, dies scheitert jedoch an dem geringen Rückstellvermögen dieses Schaumstoffs und daran, daß er geschlossenzellig und somit nicht atmungsaktiv ist.

Der Erfindung lag daher die Aufgabe zugrunde, wiederaufarbeitbare Automobilsitze zu entwickeln, die hervorragende Polstereigenschaften aufweisen und atmungsaktiv sind. Diese Aufgabe wird gelost bei Automobilsitzen aus
A. einem Rahmen aus Polyolefin-Schaumstoff und
B. einem Kern aus organischen Fasern, die durch ein Bindemittel zusammengehalten werden.

Sowohl der eigentliche Sitzbereich als auch die Rückenlehne können aus der erfindungsgemäßen Werkstoff-Kombination gefertigt werden. Unter Rahmen sind dabei die Seitenteile, die Armlehnen und gegebenenfalls auch der Unterboden bzw. die Rückseite des Sitzes zu verstehen, d.h. Bereiche des Sitzes, die eine tragende Funktion haben und daher verhältnismäßig stabil sein müssen; der Kern umfaßt die eigentliche Sitzfläche sowie die Rückenlehn-Fläche, d.h. Bereiche, die mit dem Körper des Fahrers unmittelbar in Kontakt kommen und daher weich, flexibel und atmungsaktiv sein müssen.

Als Material für den Rahmen kann im Prinzip jeder geschlossenzellige Polyolefin-Schaumstoff verwendet werden. Bevorzugt sind Partikelschaumstoffe, die aus einer Vielzahl von miteinander verschweißten Schaumpartikeln bestehen. Als Polyolefine kommen Polyethylen und Polypropylen in Frage, sowie Copolymere des Ethylens und Propylens. Bevorzugt sind Propylencopolymere mit einem Schmelzpunkt zwischen 125 und 150°C. Als Schmelzpunkt gilt dabei das nach der DSC-Methode bestimmte Maximum beim zweiten Aufschmelzen einer Probe (Kristallitschmelzpunkt). Copolymerisate des Propylens mit 1 bis 30 Gew.-%, insbesondere 1 bis 6 Gew.-% Ethylen und/oder Buten-1 sind besonders gut geeignet. Der Schaumstoff ist ein sogenannter Partikelschaumstoff, wie er durch Verschweißen von Schaumstoffpartikeln, üblicherweise mit einem mittleren Durchmesser von 2 bis 8 mm, vorzugsweise 3 bis 6 mm, erhältlich ist. Die mittlere Dichte des Schaumstoffs, d.h. die Dichte gemittelt über alle Dichtebereiche des Formkörpers, liegt zwischen 0,015 und 0,15 g/cm³, vorzugsweise zwischen 0,02 und 0,08 g/cm^{3.}

Der Schaumstoff-Rahmen wird an den Schaumstoffpartikeln durch Verschweißen mittels heißer Gase, z.B. Wasserdampf oder Heißluft, in Formen hergestellt. Diese Arbeitsweise ermöglicht die Herstellung von Formteilen beliebiger Ausgestaltung in einem Arbeitsgang ohne Nachbearbeitung. Aussparungen und Befestigungsstellen im Formteil können je nach Anforderung vorgesehen werden. Einsätze (Fittings) aus Metall oder temperaturbeständigen Kunststoffen können in situ eingebaut werden.

Der Faserkern besteht aus organischen Fasern, die durch ein Bindemittel miteinander verbunden sind. Geeignete Fasern sind Naturfasern, z.B. aus Kokos, Cellulose, Sisal, Hanf, Flachs, Jute oder Banane. Grundsätzlich können auch synthetische Fasern, z.B. aus Polyamid, Polyester oder Polypropylen verwendet werden. Bevorzugt sind Kokosfasern. Die Fasern sind gewöhnlich als Endlosfasern oder vorzugsweise 1 bis 10 cm lang wirr in einer Matte abgelegt und durch das Bindemittel miteinander verbunden. Bei den bevorzugten Kokosfasern wird zunächst aus langen Fasern ein Seil gedreht. Dann werden die Fasern geschnitten und lose als Matte abgelegt. Das Verbinden der Fasern miteinander geschieht durch Besprühen oder Tränken der Matte mit einer wässrigen Dispersion des Bindemittels. Bevorzugtes Bindemittel ist Kautschuk in Form eines wässrigen Latex, der übliche Zusätze, z.B. p_{H}-Modifier, Viskositätsregler und Dispersionshilfsmittel sowie Vulkanisationshilfsmittel, wie Schwefel, Zinkoxid und Antioxidantien enthalten kann. Grundsätzlich können auch synthetische Kunstharze, wie Butadien/Styrol-Copolymerisate, Acrylate, Polyvinylacetat und Ethylen/Vinylacetat-Copolymere verwendet werden, die gegebenenfalls zur Vernetzung führende Gruppen, z.B. N-Methylolacrylamid enthalten können. Nach dem Tränken der Fasermatte mit dem Bindemittel wird sie in einem Umluftofen bei Temperaturen von 100 bis 130°C getrocknet und das Bindemittel wird gegebenenfalls vulkanisiert bzw. vernetzt. Aus so hergestellten Mattenbahnen können fertige Kerne herausgeschnitten werden. Man kann auch mehrere Zuschnitte übereinanderlegen, erneut mit Bindemittel-Dispersion tränken, trocknen und vernetzen. Die Formgebung des Kerns kann auch durch Verpressen in geeigneten Stahlformen bei erhöhter Temperatur vorgenommen werden. Im fertigen Kern beträgt das Gewichtsverhältnis Bindemittel zu Faser vorzugsweise 1:1 bis 3:1, insbesondere 1,2:1 bis 1,6:1. Das Kernmaterial ist luftdurchlässig und insofern atmungsaktiv.

Die Dichte des Kernmaterials liegt im allgemeinen im Bereich zwischen 60 und 100 g/l; die Dicke des Kerns kann in weiteren Grenzen zwischen 0,5 und 10 cm schwanken. Bevorzugt ist eine Dicke von 1 bis 5 cm, je nach Zuschnitt des Kerns kann dieser auch unterschiedlich dicke Bereiche aufweisen.

Die Verbindung zwischen Rahmen und Kern kann durch Faservliese, z.B. auf Acrylat- oder Polyester-Basis hergestellt werden, die auf Rahmen und Kern aufgeklebt werden. Man kann aber auch bei der Herstellung des Rahmens durch direktes Verschweißen der Partikel mit dem Kern die Verbindung zwischen Rahmen und Kern realisieren.

Der fertige Automobilsitz enthält noch einen üblichen textilen Überzug sowie Befestigungselemente und gegebenenfalls Verstärkungseinlagen und metallische Versteifungselemente.

## Patentansprüche

1. Automobilsitz, umfassend
A. einen Rahmen aus Polyolefin-Schaumstoff und
B. einen Kern aus organischen Fasern, die durch ein Bindemittel zusammengehalten werden.

2. Automobilsitz nach Anspruch 1, bestehend aus Rückenlehne und Sitzbereich, die beide jeweils einen Rahmen und einen Kern enthalten.

3. Automobilsitz nach Anspruch 1, dadurch gekennzeichnet, daß der Polyolefin-Schaumstoff ein Polypropylen-Partikelschaum mit einer Dichte zwischen 0,15 und 0,15 g/cm³ ist.

4. Automobilsitz nach Anspruch 1, dadurch gekennzeichnet, daß die Fasern wirr verlegt sind und eine Länge von 1 bis 10 cm aufweisen.

5. Automobilsitz nach Anspruch 1, dadurch gekennzeichnet, daß der Kern aus Naturfasern, vorzugsweise aus Kokosfasern besteht.

6. Automobilsitz nach Anspruch 1, dadurch gekennzeichnet, daß das Bindemittel vulkanisierter Kautschuk ist.

7. Automobilsitz nach Anspruch 1, dadurch gekennzeichnet, daß das Bindemittel ein vorzugsweise vernetztes Kunstharz ist.

8. Automobilsitz nach Anspruch 1, dadurch gekennzeichnet, daß Rahmen und Kern mittels eines Faservlieses miteinander verklebt sind.

9. Automobilsitz nach Anspruch 1, dadurch gekennzeichnet, daß der Kern in den Rahmen ohne Verklebung integriert ist.
